# EUROPÄISCHE PATENTSCHRIFT

(11) **EP 4 473 245 B1**
(45) Veröffentlichungstag und Bekanntmachung des Hinweises auf die Patenterteilung: **24.09.2025**
(21) Anmeldenummer: 23701129.1
(22) Anmeldetag: 19.01.2023
(51) Int. Cl.: F21V 8/00, B32B 17/10

(54) **VERBUNDSCHEIBE MIT LICHTQUELLE**
COMPOUND GLAZING WITH LIGHT SOURCE
VITRE COMPOSITE POURVUE DE SOURCE LUMINEUSE

(30) Priorität: 31.01.2022 EP 22154153
(43) Veröffentlichungstag der Anmeldung: 11.12.2024
(73) Patentinhaber: Saint-Gobain Sekurit France, 60150 Thourotte (FR)
(72) Erfinder: DO ROSARIO, Jefferson, 52134 Herzogenrath (DE); ZEICHNER, Achim, 52134 Herzogenrath (DE); MANDELARTZ, Matthias, 52134 Herzogenrath (DE); SARKISSIAN, Pierre, 52134 Herzogenrath (DE)
(74) Vertreter: SGR Germany-Patents
(86) Internationale Anmeldenummer: PCT/EP2023/051256
(87) Internationale Veröffentlichungsnummer: WO 2023/144007

(56) Entgegenhaltungen:
- WO-A1-2021/254976
- US-A1- 2019 255 812
- US-B2- 10 139 080

## Beschreibung

Die Erfindung betrifft eine Verbundscheibe mit Lichtquelle, ein Verfahren zu deren Herstellung und deren Verwendung.

Verbundscheiben mit elektrisch steuerbaren optischen Eigenschaften sind als solche bekannt. Sie umfassen Verbundscheiben, welche mit Funktionselementen ausgestattet sind, deren optische Eigenschaften durch eine angelegte elektrische Spannung verändert werden können. Bei den Funktionselementen handelt es sich um flächenhafte Strukturen mit elektrisch regelbaren optischen Eigenschaften einer aktiven Schicht. Das heißt, die optischen Eigenschaften der aktiven Schicht und insbesondere deren Transparenz, Streuverhalten oder Leuchtkraft sind durch eine elektrische Spannung steuerbar. Beispiele für elektrooptische Funktionselemente sind SPD-Funktionselemente (SPD = Suspended Particle Device), die beispielsweise aus EP0876608B1 und WO2011033313A1 bekannt sind, und PDLC-Funktionselemente (PDLC = Polymer Dispersed Liquid Crystal), die beispielsweise aus DE102008026339A1 bekannt sind. Abgesehen davon gibt es auch elektrochrome Funktionselemente, die beispielsweise aus EP3702572A1 oder EP2917159A1 bekannt sind.

Optisch steuerbare Funktionselemente, wie SPD-, PDLC- oder elektrochrome Funktionselemente, sind als Mehrschichtfolie kommerziell erhältlich, wobei die aktive Schicht zwischen zwei Flächenelektroden angeordnet ist, die zum Anlegen einer Spannung zur Steuerung der aktiven Schicht dienen. In aller Regel sind die beiden Flächenelektroden zwischen zwei Trägerfolien, typischerweise aus PET, angeordnet. Kommerziell erhältliche Mehrschichtfolien werden zudem beidseitig mit einer Schutzfolie aus Polypropylen oder Polyethylen abgedeckt, welche dazu dienen, die Trägerfolien vor Verschmutzungen oder Verkratzungen zu schützen. Insbesondere bei der Herstellung einer Verbundscheibe wird das elektrooptische Funktionselement in der gewünschten Größe und Form aus der Mehrschichtfolie ausgeschnitten und zwischen die Folien einer Zwischenschicht eingelegt, mittels derer zwei Glasscheiben miteinander zur Verbundscheibe laminiert werden. Eine typische Anwendung sind Windschutzscheiben mit elektrisch regelbaren Sonnenblenden, welche beispielsweise aus DE102013001334A1, DE102005049081B3, DE102005007427A1, DE202020005499U1 und DE102007027296A1 bekannt sind.

Abgesehen von optisch steuerbaren Funktionselementen kann eine Verbundscheibe auch weitere Elemente umfassen, die optisch steuerbare Eigenschaften aufweisen. Es können beispielsweise mittels einer Lichtquelle, eines Lichtleiters und eines Auskopplungselementes Lichteffekte in einer Verbundscheibe, die Teil der Verbundscheibe ist, erzeugt werden. Das Licht der Lichtquelle wird dabei in den Lichtleiter eingekoppelt, wobei es unter Ausnutzung des Effekts der Totalreflexion im Lichtleiter verbleibt bis es auf das Auskopplungselement trifft. Am Auskopplungselement wird das Licht aus dem Lichtleiter abgestrahlt, wodurch eine lokal begrenztes Leuchten erzeugt werden kann. Der Lichtleiter und das Auskopplungselement kann innerhalb der Verbundscheibe einlaminiert sein. Es kann aber auch sein, dass der Lichtleiter beispielsweise die Innenscheibe der Verbundscheibe darstellt und das Auskopplungselement beispielsweise durch lokale begrenztes Aufrauen einer Oberfläche der Innenscheibe erzeugt wird. Die Lichtquelle ist meist ein LED-Modul, welches am Rand oder in einem Loch des Lichtleiters positioniert ist, um das Licht optimal in den Lichtleiter einkoppeln zu können. Solche Ausgestaltungen sind bereits in mehreren Schriften offenbart (bspw. WO200777099A1, WO2010049638A1, US20120104789A1 und WO2018149568A1).

Die US10139080B2 offenbart eine Dachscheibe mit Innenscheibe, Außenscheibe, thermoplastischer Zwischenschicht sowie einem SPD-Element. Zwischen der Außenscheibe und der Innenscheibe sowie innerhalb der thermoplastischen Zwischenschicht sind Leuchtdioden einlaminiert, die über eine elektrische Kontaktierung an- und ausgeschaltet werden können. Das SPD-Element ist dabei näher als die Leuchtdioden zur äußeren Umgebung in der Dachscheibe angeordnet. Hierdurch blockiert das SPD-Element in einem abgedunkelten Zustand den Austritt von Licht der Dioden in die äußere Umgebung. Es wird keine Lichteinkopplung gezeigt; die Leuchtdioden strahlen Licht durch die Innenscheibe in den Fahrzeuginnenraum.

Die US2019255812A1 offenbart eine Verbundscheibe mit einem einlaminierten PDLC-Element. Es wird keine Lichtquelle zur Einkopplung von Licht oder ein Auskopplungselement zum Auskoppeln von Licht offenbart.

Beide Technologien können miteinander kombiniert werden. Dies bietet sich besonders bei Dachscheiben in Fahrzeugen an. Die Fahrzeuginsassen können beispielsweise mittels Schaltens des Funktionselements zwischen Durchsicht durch die Dachscheibe und blockierter Sicht, bspw. durch Lichtstreuung (wenn es sich um ein PDLC-Funktionselement handelt), wechseln. Andererseits können mittels Licht-Einkopplung und -Auskopplung Lichteffekte an der Dachscheibe erzeugt werden. Diese können ästhetischen Mehrwert liefern, um das Wohlbefinden der Insassen zu verbessern, oder aber bei Dunkelheit Licht spenden. Schriften, die die Kombination von Funktionselementen mit der Lichteinkopplung sowie gezielter, regional begrenzter Lichtauskopplung lehren, sind beispielsweise CN102785555A, CN105291788A, US2019106055A1 und CN109606251A.

Es wurde jedoch erkannt, dass es bei einer Anordnung der Lichtquelle in räumlicher Nähe zu dem Funktionselement zu unästhetischen Lichteffekten im Bereich des Funktionselementes kommen kann. Da das Licht der Lichtquelle nicht zu 100 % in den Lichtleiter eingekoppelt werden kann, kann Licht auf das Funktionselement auftreffen und reflektiert werden. Diese Reflexion wird vom Betrachter als eine Art Lichtschein auf der Scheibe wahrgenommen und ist in Abhängigkeit vom verwendeten Funktionselement unterschiedlich stark ausgeprägt.

Demgegenüber besteht die Aufgabe der vorliegenden Erfindung darin, eine verbesserte Verbundscheibe mit einer Lichtquelle und einem Funktionselement mit elektrisch steuerbaren optischen Eigenschaften zur Verfügung zu stellen, wobei vorzugsweise störende und unerwünschte Lichtscheineffekte, welche durch das Funktionselement in Wechselwirkung mit eingekoppeltem sichtbaren Licht entstehen, reduziert oder vollständig vermieden werden sollen.

Die Aufgabe der vorliegenden Erfindung wird erfindungsgemäß durch eine Verbundscheibe nach Anspruch 1 gelöst. Vorteilhafte Ausgestaltungen der Erfindung ergeben sich aus den Unteransprüchen.

Die erfindungsgemäße Verbundscheibe mit einer Lichtquelle umfasst mindestens eine Außenscheibe und eine Innenscheibe, eine erste thermoplastische Folie, ein Funktionselement, eine abgedunkelte Schicht und ein Auskopplungselement. Die erste thermoplastische Folie ist zwischen der Außenscheibe und der Innenscheibe angeordnet. Das Funktionselement und die abgedunkelte Sicht sind vorzugsweise zwischen der Außenscheibe und der Innenscheibe angeordnet. Das Funktionselement weist elektrisch steuerbare optische Eigenschaften auf. Das Funktionselement ist vorzugsweise in einem Durchsichtbereich der Verbundscheibe angeordnet. Das Auskopplungselement ist zum Auskoppeln von Licht aus der Innenscheibe vorgesehen. Die Lichtquelle ist an einer Seitenkante der Innenscheibe oder in einer Ausnehmung der Innenscheibe angeordnet. Die Lichtquelle ist dafür vorgesehen Licht in die Innenscheibe einzukoppeln. Das Auskopplungselement ist dafür vorgesehen, das von der Lichtquelle in die Innenscheibe eingekoppelte Licht aus der Innenscheibe auszukoppeln. Die abgedunkelte Schicht weist zumindest einen opaken Bereich mit einem Lichttransmissionsgrad von kleiner oder gleich 50 % auf. Der opake Bereich der abgedunkelten Schicht liegt zumindest im Bereich zwischen der Lichtquelle und dem Funktionselement vor. Damit ist gemeint, dass der opake Bereich der abgedunkelten Schicht sich zumindest über den gesamten zwischen der Lichtquelle und dem Funktionselement befindlichen Bereich erstreckt.

Die Innenscheibe weist eine der ersten thermoplastischen Folie zugewandte außenseitige Oberfläche und eine von der ersten thermoplastischen Folie abgewandte innenraumseitige Oberfläche auf. Vorzugsweise koppelt das Auskopplungselement das von der Lichtquelle eingekoppelte Licht mehrheitlich über die innenraumseitige Oberfläche der Innenscheibe aus.

Das Licht der Lichtquelle kann nicht zu 100 % über Totalreflexion in die Innenscheibe eingekoppelt werden. Ein Teil des Lichts transmittiert durch die innenraumseitige Oberfläche der Innenscheibe und die außenseitige Oberfläche der Innenscheibe. Dieser Teil des Lichtes wird an der Außenscheibe reflektiert und trifft zumindest bereichsweise auf das Funktionselement. Trifft von der Lichtquelle ausgestrahlte Licht auf das Funktionselement auf führt dies zu einem optisch sichtbaren Lichtschein, welcher in Intensität zunimmt, je näher der betroffene Bereich des Funktionselementes sich an der Lichtquelle befindet. Der opake Bereich verhindert weitestgehend, dass das von der Lichtquelle ausgestrahlte Licht auf das Funktionselement auftrifft. Der opake Bereich absorbiert das durch die außenseitige Oberfläche der Innenscheibe ausgetretene Licht, dadurch kann das Entstehen eines optisch sichtbaren Lichtscheins weitestgehend vermieden werden.

Die Außenscheibe weist eine von der ersten thermoplastischen Folie abgewandte außenseitige Oberfläche auf, welche auch gleichzeitig die Außenfläche der Verbundscheibe ist. Die Außenscheibe weist außerdem eine der ersten thermoplastischen Folie zugewandte innenraumseitige Oberfläche auf. Die innenraumseitige Oberfläche der Innenscheibe ist zugleich die Innenfläche der Verbundscheibe. Die Verbundscheibe ist dafür vorgesehen, eine äußere Umgebung von einem Innenraum, vorzugsweise einen Fahrzeuginnenraum, abzutrennen. Die außenseitige Oberfläche der Außenscheibe ist dabei dafür vorgesehen, der äußeren Umgebung zugewandt zu sein und die innenraumseitige Oberfläche der Innenscheibe ist dafür vorgesehen, dem Innenraum zugewandt zu sein.

Die Verbundscheibe weist eine umlaufende Seitenkante auf, welche vorzugsweise eine Oberkante und eine Unterkante sowie zwei dazwischen verlaufende Kanten mit einer linken und einer rechten Kante umfasst. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

In einer bevorzugten Ausführungsform der Erfindung ist die abgedunkelte Schicht zwischen dem Funktionselement und der Innenscheibe und die erste thermoplastische Folie zwischen dem Funktionselement und der Außenscheibe angeordnet. In Durchsicht durch die Verbundscheibe deckt sich der opake Bereich der abgedunkelten Schicht zumindest mit einem zur Lichtquelle nächstliegenden Randbereich des Funktionselementes. Der opake Bereich erstreckt sich also über den gesamten zwischen der Lichtquelle und dem Funktionselement befindlichen Bereich und einem Randbereich des Funktionselementes. Dadurch, dass die angedunkelte Schicht zwischen dem Funktionselement und der Innenscheibe angeordnet ist, wird das Auftreffen von Licht auf der der Innenscheibe zugewandten Fläche des Funktionselementes effektiv verhindert. Im zur Lichtquelle nächstliegenden Randbereich des Funktionselementes ist der Lichtschein besonders intensiv. Durch die Erstreckung des opaken Bereichs auf den zur Lichtquelle nächstliegenden Randbereich des Funktionselementes wird die Intensität des Lichtscheins verringert. Dies ist ein großer Vorteil der Erfindung. Der zur Lichtquelle nächstliegende Randbereich des Funktionselementes, welcher sich in Durchsicht durch die Verbundscheibe mit dem opaken Bereich deckt, ist vorzugsweise streifenförmig ausgebildet. Die Breite dieses Randbereiches beträgt vorzugsweise mindestens 1 cm, besonders bevorzugt mindestens 3 cm und insbesondere mindestens 5 cm. Mit "Breite" ist im Sinne der Erfindung die Ausdehnung senkrecht zur Erstreckungsrichtung gemeint.

Vorzugsweise umfasst die Verbundscheibe eine zweite transparente thermoplastische Folie, welche besonders bevorzugt die gleiche Dicke wie das Funktionselement oder eine um bis zu 10 % von der Dicke des Funktionselementes abweichende Dicke aufweist. Die zweite thermoplastische Folie ist zumindest teilweise rahmenförmig um das Funktionselement angeordnet. Besonders bevorzugt ist die zweite thermoplastische Folie rahmenartig ausgebildet mit einer Aussparung, in welche das Funktionselement eingelegt ist. Mit "teilweise rahmenförmig um das Funktionselement angeordnet", kann beispielsweise gemeint sein, dass das Funktionselement mit einem Abschnitt der umlaufenden Seitenkante der Verbundscheibe bündig abschließt, sodass die zweite thermoplastische Folie das Funktionselement nur außerhalb dieses Abschnitts umrandet. Aufgrund der zweiten thermoplastischen Folie, welche zumindest teilweise um das Funktionselement angeordnet ist, können Dickenunterschiede der Verbundscheibe vermieden werden, was wiederum die Stabilität der Verbundscheibe erhöht.

In einer weiteren bevorzugten Ausführungsform der Erfindung weist zumindest der opake Bereich der abgedunkelten Schicht einen Lichttransmissionsgrad von kleiner 10 % und bevorzugt von kleiner 1 % auf. Die abgedunkelte Schicht ist in dieser Ausführungsform besonders bevorzugt als eine thermoplastische Folie mit dem opaken Bereich und einem transparenten Bereich ausgebildet ist. Der transparente Bereich der abgedunkelten Schicht weist einen Lichttransmissionsgrad von 50 % oder höher auf. Die abgedunkelte Schicht erstreckt sich vorzugsweise über die gesamte Fläche der Verbundscheibe und bildet gemeinsam mit der ersten thermoplastischen Folie und gegebenenfalls mit der zweiten thermoplastischen Folie in der laminierten Verbundscheibe eine thermoplastische Zwischenschicht. Das Funktionselement ist hierbei innerhalb der thermoplastischen Zwischenschicht eingebettet, wobei die erste thermoplastische Folie vorzugsweise zwischen der Außenscheibe und dem Funktionselement angeordnet ist und die abgedunkelte Schicht vorzugsweise zwischen dem Funktionselement und der Innenscheibe angeordnet ist. Die abgedunkelte Schicht besteht in dieser Ausführungsform vorzugsweise aus dem gleichen Material wie die erste thermoplastische Folie, wobei der opake Bereich der abgedunkelten Schicht durch eine bereichsweise Färbung oder Tönung erzielt wird. Dieses Ausführungsform ist besonders vorteilhaft, da die abgedunkelte Schicht neben der Lösung der technischen Aufgabe auch zur Verklebung der Außenscheibe, des Funktionselementes und der Innenscheibe verwendet wird, wodurch Materialkosten und Verfahrensschritte reduziert werden können.

Alternativ weist die gesamte abgedunkelte Schicht einen Lichttransmissionsgrad von kleiner 10 % und bevorzugt von kleiner 1 % auf. Die abgedunkelte Schicht erstreckt sich in diesem Fall vorzugsweise über nicht mehr als 40 %, bevorzugt über nicht mehr als 30 % und besonders bevorzugt über nicht mehr als 20 % der Fläche der Verbundscheibe. In der Flächenebene der Verbundscheibe von der abgedunkelten Schicht versetzt ist eine transparente dritte thermoplastische Folie angeordnet, sodass sich die transparente thermoplastische Folie und die abgedunkelte Schicht zusammen betrachtet über die gesamte Fläche der Verbundscheibe erstrecken. Die abgedunkelte Schicht erstreckt sich also über einen Bereich der Verbundscheibe, welcher nicht mehr als 40 % der Fläche der Verbundscheibe ausmacht; die dritte thermoplastische Folie erstreckt sich über die übrige Fläche der Verbundscheibe. Die erste thermoplastische Folie, die gegebenenfalls zweite thermoplastische Folie, die dritte thermoplastische Folie und die abgedunkelte Schicht ergeben in einem laminierten Zustand der Verbundscheibe eine thermoplastische Zwischenschicht. Das Funktionselement ist hierbei innerhalb der thermoplastischen Zwischenschicht eingebettet, wobei die erste thermoplastische Folie vorzugsweise zwischen der Außenscheibe und dem Funktionselement angeordnet ist und die abgedunkelte Schicht sowie die dritte thermoplastische Folie vorzugsweise zwischen dem Funktionselement und der Innenscheibe angeordnet sind. Die abgedunkelte Schicht besteht in dieser Ausführungsform vorzugsweise aus dem gleichen Material wie die erste thermoplastische Folie und die dritte thermoplastische Folie, wobei der geringe Lichttransmissionsgrad der abgedunkelten Schicht durch Färbung oder Tönung erzielt wird. Dieses Ausführungsform ist besonders vorteilhaft, da die abgedunkelte Schicht neben der Lösung der technischen Aufgabe auch zur Verklebung der Außenscheibe, des Funktionselementes und der Innenscheibe verwendet wird, wodurch Materialkosten und Verfahrensschritte reduziert werden können.

Im Sinne der vorliegenden Erfindung ist etwas "transparent", wenn der Lichttransmissionsgrad mehr als 70 %, insbesondere mehr als 75 % hoch ist. "Opak" bedeutet im Sinne der Erfindung einen Lichttransmissionsgrad von weniger als weniger als 50 %, besonders bevorzugt weniger als 10 % und insbesondere weniger als 1 %. Die Bestimmung des Lichttransmissionsgrad kann gemäß ISO 9050 (2003-08) für Gebäudeverglasungen erfolgen.

In einer weiteren Ausführungsform der Erfindung ist die abgedunkelte Schicht auf der außenseitigen Oberfläche der Innenscheibe aufgebracht. Vorzugsweise ist die abgedunkelte Schicht in dieser Ausführungsform als ein, besonders bevorzugt schwarzer, Siebdruck ausgebildet. Die abgedunkelte Schicht ist hierbei zum Beispiel aus einer Emaille gebildet, enthaltend Glasfritten und ein Pigment, insbesondere Schwarzpigment. Die Emaille wird typischerweise im Siebdruckverfahren aufgebracht und eingebrannt. Dies hat den Vorteil, dass keine zusätzliche Folie oder Schicht benötigt wird, um den Lichtscheineffekt zu reduzieren. Hierdurch können Materialkosten eingespart werden.

Die Verbundscheibe kann mit einem opaken Schwarzdruck ausgestattet sein, insbesondere in einem umlaufenden Randbereich, wie es im Fahrzeugbereich insbesondere für Windschutzscheiben, Heckscheiben und Dachscheiben üblich ist. Der Schwarzdruck ist typischerweise aus einer Emaille gebildet, enthaltend Glasfritten und ein Pigment, insbesondere Schwarzpigment. Die Druckfarbe wird typischerweise im Siebdruckverfahren aufgebracht und eingebrannt. Ein solcher Schwarzdruck ist auf mindestens einer der Scheibenoberflächen aufgebracht, bevorzugt der innenraumseitigen Oberfläche der Außenscheibe und/oder der Innenscheibe. Der Abdeckdruck umgibt bevorzugt einen zentralen Durchsichtbereich rahmenartig und dient insbesondere dem Schutz des Klebstoffs, durch den die Verbundscheibe beispielsweise mit einer Fahrzeugkarosserie verbunden sein kann, vor UV-Strahlung. Der opake Schwarzdruck weist vorzugsweise eine Dicke von mindestens 10 µm und maximal 25 µm auf. Bei solchen Dicken ist der Schwarzdruck opak, ohne die Stabilität der Scheibe zu beeinträchtigen.

In einer besonders bevorzugten Ausführungsform ist die abgedunkelte Schicht eine getönte oder gefärbte thermoplastische Folie und weist einen Lichttransmissionsgrad von mindestens 15 % und höchstens 50 % auf. Vorzugsweise erstreckt sich die abgedunkelte Schicht über die gesamte Fläche der Verbundscheibe. Die abgedunkelte Schicht ist in dieser Ausführungsform vorzugsweise zwischen dem Funktionselement und der Innenscheibe angeordnet. Die Erstreckung der abgedunkelten Schicht über die gesamte Verbundscheibe verringert effektiv den Lichtschein-Effekt. Es spielt somit keine Rolle wo genau das Licht über die außenseitige Oberfläche der Innenscheibe hinaus transmittiert. Die abgedunkelte Schicht weist über die gesamte Fläche der Verbundscheibe eine hohe Absorption für Licht auf.

Die erste thermoplastische Folie, die gegebenenfalls vorhandene zweite thermoplastische Folie und die gegebenenfalls vorhandene dritte thermoplastische Folie sind bevorzugt als thermoplastische Verbundfolien ausgebildet. Sie sind vorzugsweise auf Basis von Ethylenvinylacetat (EVA), Polyvinylbutyral (PVB) oder Polyurethan (PU) oder Gemische oder Copolymere oder Derivate davon, besonders bevorzugt auf Basis von Polyvinylbutyral (PVB) und zusätzlich dem Fachmann bekannte Additive wie beispielsweise Weichmacher ausgebildet. Bevorzugt enthalten die thermoplastische Verbundfolien mindestens einen Weichmacher.

Die thermoplastische Zwischenschicht kann nur durch die erste thermoplastische Folie ausgebildet sein oder auch durch mehr als eine Folie. Die thermoplastische Zwischenschicht kann durch eine oder mehrere übereinander angeordnete thermoplastische Folien ausgebildet werden, wobei die Dicke der thermoplastischen Zwischenschicht nach der Lamination des Schichtstapels bevorzugt von 0,25 mm bis 1 mm beträgt, typischerweise 0,38 mm oder 0,76 mm. Die thermoplastische Zwischenschicht kann auch aus einer Folie ausgebildet sein, die bereichsweise gefärbt oder getönt ist. Die erste thermoplastische Folie oder mehrere thermoplastische Folien können auch funktionale thermoplastische Folien sein, insbesondere Folien mit akustisch dämpfenden Eigenschaften, eine Infrarotstrahlung reflektierende Folie, eine Infrarotstrahlung absorbierende Folie und/oder eine UV-Strahlung absorbierende Folie. So können die erste, die gegebenenfalls zweite und/oder die gegebenenfalls dritte thermoplastische Folie beispielsweise auch Bandfilterfolien sein. Auch die abgedunkelte Schicht kann, wenn sie als eine thermoplastische Folie ausgebildet ist, Teil der thermoplastischen Zwischenschicht sein.

In einer bevorzugten Ausführungsform ist die abgedunkelte Schicht als eine polymerische Folie, bevorzugt eine thermoplastische Folie, ausgebildet. Die abgedunkelte Schicht ist vorzugsweise auf Basis von Ethylenvinylacetat (EVA), Polyethylenterephthalat (PET) Polyvinylbutyral (PVB) oder Polyurethan (PU) oder Gemische oder Copolymere oder Derivate davon, besonders bevorzugt auf Basis von Polyvinylbutyral (PVB) und zusätzlich dem Fachmann bekannte Additive wie beispielsweise Weichmacher ausgebildet.

Ist etwas "auf Basis" eines polymerischen Materials ausgebildet, so besteht es mehrheitlich, also zu mindestens 50 %, vorzugsweise zu mindestens 60 % und insbesondere zu mindestens 70%, aus diesem Material. Es kann also noch weitere Materialien wie beispielsweise Stabilisatoren oder Weichmacher enthalten.

In einer besonders bevorzugten Ausgestaltung ist das Funktionselement ein PDLC-Funktionselement (*polymer dispersed liquid crystal*)*.* Das PDLC-Funktionselement enthält Flüssigkristalle, welche in eine Polymermatrix eingelagert sind. Wird an das PDLC-Funktionselement keine Spannung angelegt, so sind die Flüssigkristalle ungeordnet ausgerichtet, was zu einer starken Streuung des durch die aktive Schicht tretenden Lichts (Transluzenz) führt. Wird das Funktionselement eine Spannung angelegt, so richten sich die Flüssigkristalle in einer gemeinsamen Richtung aus und die Transmission von Licht durch das Funktionselement wird erhöht (Transparenz). Es kann allerdings auch sein, dass die Flüssigkristalle in einem spannungsfreien Zustand geordnet vorliegen und die Flüssigkristalle entsprechend ungeordnet vorliegen, wenn eine Spannung angelegt wird. Es können aber auch andere Funktionselemente verwendet werden, deren Veränderlichkeit der optischen Eigenschaften auf Flüssigkristallen basiert, beispielsweise PNLC-Funktionselemente (*polymer networked liquid crystal*)*.* Wird im Zusammenhang des Funktionselementes als PDLC-Funktionselement von dem Anlegen einer Spannung gesprochen, dann ist im Sinne der Erfindung eine Wechselspannung (der Effektivwert der Wechselspannung nicht die Momentanspannung) gemeint.

In einer weiteren bevorzugten Ausgestaltung ist das Funktionselement ein SPD-Funktionselement (*suspended particle device*). Dabei enthält das SPD-Funktionselement suspendierte Partikel. Die suspendierten Partikel verändern durch die Absorption von Licht mittels Anlegens einer Spannung den optischen Zustand des Funktionselementes. SPD-Funktionselemente weisen also Schaltzustände mit transparenten und opaken optischen Eigenschaften sowie Zwischenstufen zwischen Transparenz und Opazität auf. Wird im Zusammenhang des Funktionselementes als SPD-Funktionselement von dem Anlegen einer Spannung gesprochen, dann ist im Sinne der Erfindung eine Wechselspannung (der Effektivwert der Wechselspannung nicht die Momentanspannung) gemeint.

In einer weiteren bevorzugten Ausgestaltung ist das Funktionselement ein elektrochromes Funktionselement. In diesem Fall ist die Transmission von sichtbarem Licht durch das Funktionselement abhängig vom Einlagerungsgrad von Ionen. Die Ionen werden beispielsweise durch eine Ionenspeicherschicht freigesetzt und in eine elektrochrome Schicht eingelagert. Die Transmission kann durch die an das Funktionselement angelegte Spannung, welche eine Wanderung der Ionen hervorruft, beeinflusst werden. Geeignete elektrochrome Schichten enthalten vorzugsweise zumindest Wolframoxid oder Vanadiumoxid. Ist das Funktionselement ein elektrochromes Funktionselement, wird die Steuereinheit vorzugsweise nicht mit einem Wechselrichter ausgestattet und es wird eine Gleichspannung an das Funktionselement angelegt. Ein Gleichspannungswandler zum Erreichen von Spannungen im Bereich von 1 V bis 50 V und vorzugsweise 10 V bis 42 V, kann aber je nach Notwendigkeit ein Bestandteil der Steuereinheit sein.

In einer besonders vorteilhaften Ausführungsform der Erfindung umfasst die Verbundscheibe eine Emissivitäts-mindernde Beschichtung. Die Emissivitäts-mindernde Beschichtung ist vorzugsweise auf der innenraumseitigen Oberfläche der Innenscheibe aufgebracht.

Die Emissivitäts-mindernde Beschichtung ist eine Wärmestrahlung reflektierende Beschichtung. Eine solche Beschichtung wird häufig auch als Low-E-Beschichtung oder Beschichtung niedriger Emissivität bezeichnet. Sie hat die Funktion, die Einstrahlung von Wärme in den Innenraum zu vermeiden (thermische Strahlung der Scheibe selbst) und ebenso die Abstrahlung von Wärme aus dem Innenraum heraus. Unter Emissivität wird im Sinne der Erfindung der normale Emissionsgrad bei 283 K nach der Norm EN 12898 verstanden. Emissivitäts-mindernde Beschichtungen, welche die erfindungsgemäße Verbundscheibe aufweisen kann, sind dem Fachmann bekannt. Diese können beispielsweise wie in WO2018206236A1 offenbart ausgebildet sein.

In einer weiteren besonders bevorzugten Ausführungsform der Erfindung umfasst die Verbundscheibe eine Infrarot-Schutzschicht, welche vorzugsweise auf der innenraumseitigen Oberfläche der Außenscheibe, außenseitigen Oberfläche der Innenscheibe oder zwischen der Außenscheibe und der Innenscheibe angeordnet oder aufgebracht ist. Die Infrarot-Schutzschicht blockiert Infrarotstrahlung und lässt sichtbares Licht passieren. Im Sinne der Erfindung ist mit "blockieren von Infrarotstrahlung" gemeint, dass die Infrarotschutzschicht zumindest teilweise Infrarotstrahlung reflektiert und/oder absorbiert. Besonders bevorzugt reflektiert die Infrarotschutzschicht Infrarotstrahlung. Die Reflexion der Infrarotstrahlung weist den Vorteil auf, dass die Verbundscheibe sich nicht so stark erwärmt. Infrarot-Schutzschichten, welche die Verbundscheibe aufweisen kann, sind dem Fachmann bekannt. Diese können beispielsweise wie in WO2019120850A1 offenbart ausgebildet sein.

Die Außenscheibe und die Innenscheibe sind bevorzugt aus transparentem Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein. Die Innenscheibe kann eine Ausnehmung aufweisen, in welcher die Lichtquelle angeordnet sein kann. Die Innenscheibe besteht besonders bevorzugt aus Kalknatronglas mit einem Eisenoxidanteil von maximal 1 %. Dieser geringe Eisoxidanteil der Innenscheibe führt dazu, dass die Innenscheibe besonders klar und ungefärbt ist. Hierdurch zeichnet sich die Innenscheibe besonders gut als Lichtwellenleiter, also zum Einkoppeln von Licht, aus.

Das Licht der Lichtquelle wird in die Innenscheibe eingekoppelt, wobei die Lichtquelle zu diesem Zweck in geeigneter Weise relativ zur Scheibe angeordnet ist. Vorzugsweise ist die Lichtquelle seitlich zur Innenscheibe, d.h. an deren Seitenkante, angeordnet, was eine gute Einkopplung von Licht in die Scheibe ermöglicht. Gleichermaßen bevorzugt ist die Anordnung der Lichtquelle in einer Ausnehmung oder Durchbrechung der Innenscheibe, was ebenso eine gute Einkopplung von Licht in die Innenscheibe ermöglicht. Die Lichtquelle wird vorzugsweise mittels eines Gehäuses mit der Innenscheibe festverbunden. Das in die Innenscheibe eingekoppelte Licht wird in der Scheibe totalreflektiert, bis es an dem Auskopplungselement aus der Scheibe ausgekoppelt wird. Das von der Lichtquelle ausgestrahlte Licht ist vorzugsweise sichtbares Licht, also Licht in einem Wellenlängenbereich von 380 nm bis 780 nm. Alternativ kann die Lichtquelle infrarotes oder ultraviolettes Licht aussenden, welches bevorzugt durch fluoreszente oder lumineszente Partikel, bevorzugt als Bestandteil des Auskopplungselements, in sichtbares Licht gewandelt wird.

Die Lichtquelle enthält vorzugswese eine Leuchtdiode (LED, light emitting diode), bevorzugt mindestens eine Organische Leuchtdiode (OLED, organic light emitting diode), mindestens eine Laserdiode, mindestens eine Glühlampe und/oder mindestens eine Gasentladungslampe oder daraus besteht.

Das Auskopplungselement ist dafür vorgesehen, das von der Lichtquelle in die Innenscheibe eingekoppelte Licht in den Innenraum und/oder die äußere Umgebung zumindest teilweise auszukoppeln. Vorzugsweise koppelt das Auskopplungselement das Licht über die innenraumseitige Oberfläche der Innenscheibe in einen Innenraum, beispielsweise eine Fahrzeuginnenraum, aus. Das Auskopplungselement kann innerhalb des Durchsichtbereiches der Verbundscheibe oder außerhalb des Durchsichtbereiches angeordnet sein. Mit "Durchsichtbereich" ist im Sinne der Erfindung ein Bereich gemeint, der zur Durchsicht durch die Verbundscheibe vorgesehen ist. Der Durchsichtbereich weist keine opaken Schichten auf, wie beispielsweise Schwarzdrücke, welche die Durchsicht verhindern. Vorzugsweise ist das Auskopplungselement dazu geeignet, zumindest einen Teil des in der Innenscheibe geleiteten Lichts durch Streuung, Reflexion, Brechung oder Beugung auszukoppeln.

In einer bevorzugten Ausführungsform ist das Auskopplungselement an der außenseitigen Oberfläche oder der innenraumseitigen Oberfläche der Innenscheibe aufgebracht. Dazu ist das Auskopplungselement bevorzugt durch Laserstrukturierung, mechanische Strukturierung wie Sandstrahlen, und/oder durch Ätzen in die innenraumseitige Oberfläche und/oder die außenseitige Oberfläche der Innenscheibe eingebracht. Alternativ oder in Kombination kann das Auskopplungselement mit der innenraumseitigen Oberfläche und/oder die außenseitigen Oberfläche der Innenscheibe stoffschlüssig verbunden sein, bevorzugt durch Aufdrucken oder Aufkleben einer Farbe, einer Paste oder von Partikeln, besonders bevorzugt von lichtstreuenden, lichtbrechenden oder lichtreflektierende Partikel. Diese Form des Auskopplungselements ist bevorzugt, da sie sich einfach und unkompliziert auch nach der Herstellung der Innenscheibe umsetzen lässt.

Alternativ oder in Kombination kann das Auskopplungselement mindestens einen transparenten Körper enthalten oder daraus bestehen, der mit der innenraumseitigen und/oder der außenseitigen Oberfläche der Innenscheibe stoffschlüssig verbunden ist, beispielsweise durch Verkleben, wobei der transparente Körper bevorzugt
a) eine strukturierte Kunststofffolie oder Kunststoffplatte oder
b) eine transmissions-holographische Folie
enthält oder draus besteht.
Vorteilhafterweise weist die strukturierte Kunststofffolie oder Kunststoffplatte eine flächige Anordnung von Mikroprismen wie ein Stufenprisma auf.

In einer weiteren bevorzugten Ausführungsform der Erfindung ist das Auskopplungselement zwischen der thermoplastischen Zwischenschicht und der Innenscheibe angeordnet. Das Auskopplungselement ist in so einem Fall vorzugsweise eine Kunststofffolie oder Kunststoffplatte. Auf diese Weise ist das Auskopplungselement vor äußeren, schädlichen Einflüssen geschützt. Das Auskopplungselement kann auch auf der thermoplastischen Zwischenschicht aufgedruckt sein.

Es ist auch möglich, dass das Auskopplungselement innerhalb der Innenscheibe angeordnet ist. Das Auskopplungselement wird dazu vorzugsweise während der Herstellung der Innenscheibe, besonders bevorzugt durch das künstliche Erzeugen optischer Defekte, eingebracht.

Ein weiterer Aspekt der Erfindung umfasst ein Verfahren zur Herstellung einer erfindungsgemäßen Verbundscheibe mit Lichtquelle. Das Verfahren umfasst dabei die folgenden Verfahrensschritte:
(a) Es wird ein Schichtstapel aus der Außenscheibe, der ersten thermoplastischen Folie, dem Funktionselement, der abgedunkelten Schicht, dem Auskopplungselement und der Innenscheibe erzeugt. Vorzugsweise werden das Funktionselement, die abgedunkelte Schicht und die erste thermoplastische Folie zwischen der Außenscheibe und der Innenscheibe angeordnet.
(b) der Schichtstapel wird zu der Verbundscheibe laminiert.
(c) die Lichtquelle wird an einer Seitenkante der Innenscheibe oder in einer Ausnehmung der Innenscheibe angeordnet.
Vorzugsweise wird die Lichtquelle so angeordnet, dass sich der opake Bereich der abgedunkelten Schicht zumindest über den zwischen der Lichtquelle und dem Funktionselement befindlichen Bereich erstreckt.

Die Lamination des Schichtstapels erfolgt unter Einwirkung von Hitze, Vakuum und/oder Druck, wobei die einzelnen Schichten durch mindestens eine thermoplastische Folie miteinander verbunden (laminiert) werden. Es können an sich bekannte Verfahren zur Herstellung einer Verbundscheibe verwendet werden. Es können beispielsweise sogenannte Autoklav-Verfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 130 °C bis 145 °C. Der Schichtstapel kann auch in einem Kalander zwischen mindestens einem Walzenpaar zu einer Verbundscheibe gepresst werden. Anlagen dieser Art sind zur Herstellung von Verbundscheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Außenscheibe und die Innenscheibe innerhalb von beispielsweise etwa 60 Minuten bei verminderten Drücken von 0,01 mbar bis 800 mbar und Temperaturen von 80°C bis 170°C laminiert werden können.

Die erfindungsgemäße Verbundscheibe kann beispielsweise die Dachscheibe, Windschutzscheibe, Seitenscheibe oder Heckscheibe eines Fahrzeugs oder eine andere Fahrzeugverglasung sein, beispielsweise eine Trennscheibe in einem Fahrzeug, bevorzugt in einem Schienenfahrzeug oder einem Bus. Alternativ kann die Verbundscheibe eine Architekturverglasung, beispielsweise in einer Außenfassade eines Gebäudes oder eine Trennscheibe im Innern eines Gebäudes, oder ein Einbauteil in Möbeln oder Geräten sein.

Ein weiterer Aspekt der Erfindung umfasst die Verwendung der erfindungsgemäßen Verbundscheibe in Fortbewegungsmitteln für den Verkehr auf dem Lande, in der Luft oder zu Wasser, bevorzugt in Kraftfahrzeugen beispielsweise als Windschutzscheibe, Heckscheibe, Seitenscheiben und/oder Glasdach, besonders bevorzugt als Dachscheibe. Alternativ kann die Verbundscheibe als funktionales und/oder dekoratives Einzelstück und als Einbauteil in Möbeln, Geräten und Gebäuden verwendet werden.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Figur 1: eine Draufsicht auf eine Ausgestaltung der erfindungsgemäßen Verbundscheibe,
- Figur 1a: eine schematische Querschnittdarstellung der Ausgestaltung der erfindungsgemäßen Verbundscheibe aus Figur 1,
- Figur 1b: ein vergrößerter Ausschnitt eines Randbereiches der Verbundscheibe aus Figur 1a,
- Figur 2: eine Draufsicht auf weitere Ausgestaltungen der erfindungsgemäßen Verbundscheibe und
- Figuren 3-6: die weiteren Ausgestaltungen der erfindungsgemäßen Verbundscheibe aus Figur 2 in einer schematischen Querschnittdarstellung.

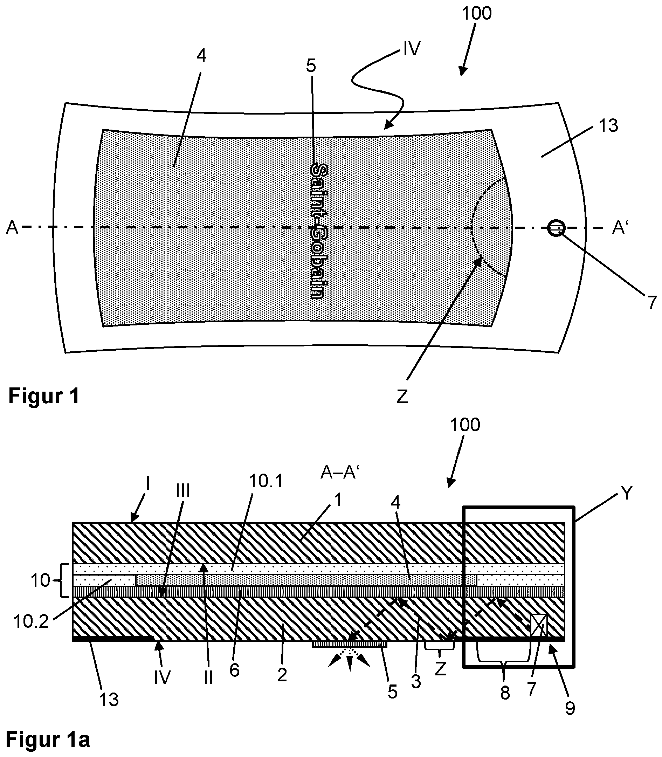

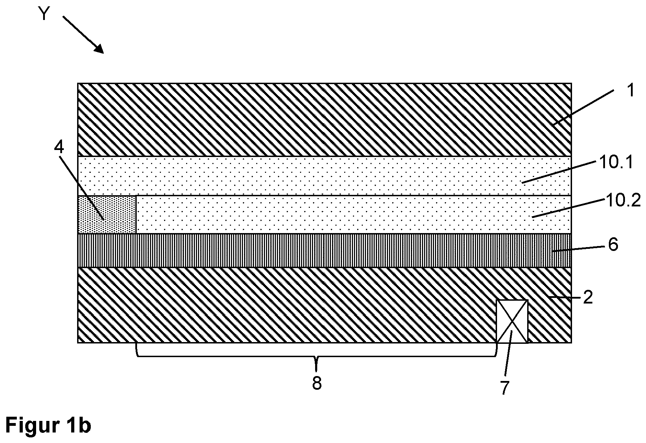

Figur 1 und Figur 1a zeigen unterschiedliche Aspekte einer Ausgestaltung einer erfindungsgemäßen Verbundscheibe 100. Figur 1 ein zeigt eine Draufsicht der erfindungsgemäßen Verbundscheibe 100 und Figur 1a zeigt eine Querschnittansicht auf die erfindungsgemäße Verbundscheibe 100. Die Querschnittansicht von Figur 1a entspricht der Schnittlinie A-A' der Verbundscheibe 100, wie in Figur 1 angedeutet ist.

In einer Ausnehmung der Verbundscheibe 100 ist eine Lichtquelle 7 angeordnet. Die Verbundscheibe 100 ist beispielsweise eine Dachscheibe eines Fahrzeugs und die Verbundscheibe 100 ist in ein Dach eines Fahrzeugs eingebaut. Die Verbundscheibe 100 umfasst eine Außenscheibe 1 und eine Innenscheibe 2, welche durch eine flächig angeordnete Zwischenschicht 10, miteinander verbunden sind. Die Außenscheibe 1 weist eine von der Zwischenschicht 10 abgewandte, außenseitige Oberfläche I und eine der Zwischenschicht 10 zugewandte, innenraumseitige Oberfläche II auf. Die Innenscheibe 2 weist eine von der Zwischenschicht 10 abgewandte, innenraumseitige Oberfläche IV und eine der Zwischenschicht 10 zugewandte, außenseitige Oberfläche III auf. Die innenraumseitige Oberfläche IV der Innenscheibe 2 ist gleichzeitig die Fläche der Verbundscheibe 100, welche dem Fahrzeuginnenraum zugewandt ist und die außenseitige Oberfläche I der Außenscheibe 1 ist gleichzeitig die Fläche der Verbundscheibe 100, welche der äußeren Umgebung zugewandt ist. Die Außenscheibe 1 besteht beispielsweise aus leicht farblichgetöntem Kalknatronglas mit einer Dicke von 2,1 mm. Die Innenscheibe 2 besteht beispielsweise aus Kalknatronglas mit einem Eisenoxidanteil von maximal 1 %. Die Innenscheibe 2 weist beispielsweise eine Dicke von 1,6 mm auf. Die Innenscheibe 2 weist aufgrund ihres geringen Eisenoxidanteils eine sehr geringe farbliche Tönung auf und ist deutlich farbloser als üblicherweise für den Fahrzeugbereich hergestelltes Kalknatronglas. Die Innenscheibe 2 weist aufgrund ihrer Farblosigkeit gute Eigenschaften als Lichtleiter auf.

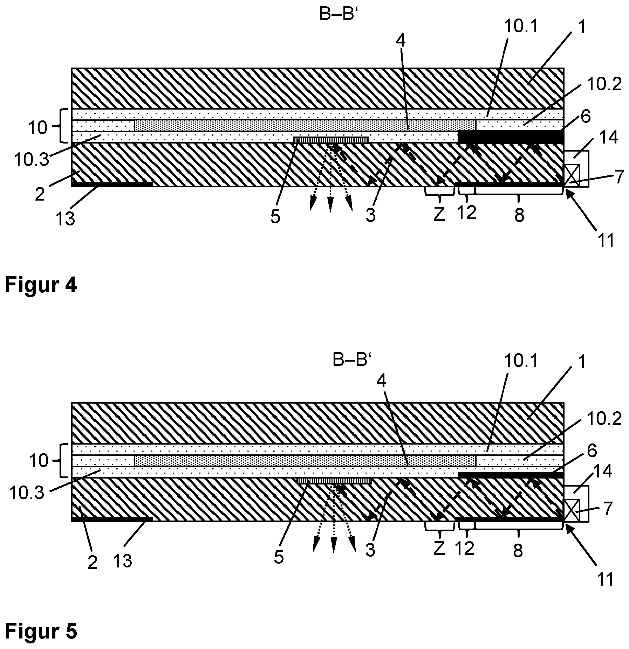

Die Zwischenschicht umfasst eine erste thermoplastische Folie 10.1, eine zweite thermoplastische Folie 10.2 und eine abgedunkelte Schicht 6. Die erste thermoplastische Folie 10.1 ist flächig auf der innenraumseitigen Oberfläche II der Außenscheibe 1 angeordnet, wobei die abgedunkelte Schicht 6 flächig auf der außenseitigen Oberfläche III der Innenscheibe 2 angeordnet ist. Die abgedunkelte Schicht 6 erstreckt sich dabei unter anderem über den gesamten zwischen der Lichtquelle 7 und dem Funktionselement 4 befindlichen Bereich 8 der Verbundscheibe 100 und über einen zu der Lichtquelle 7 nächstliegenden Randbereich 12 des Funktionselementes 4 (der Randbereich 12 des Funktionselementes 4 ist in der Figur 4 und der Figur 5 gezeigt). Die zweite thermoplastische Folie 10.2 ist rahmenförmig, ähnlich einem Passpartout, um ein Funktionselement 4 angeordnet, wobei die zweite thermoplastische Folie 10.2 und das Funktionselement 4 zwischen der ersten thermoplastischen Folie 10.1 und der abgedunkelten Schicht 6 angeordnet sind. Die zweite thermoplastische Folie 10.2 und das Funktionselement 4 erstrecken sich zusammen betrachtet über die gesamte Fläche der Verbundscheibe 100. Die erste und zweite thermoplastische Folie 10.1, 10.2 sowie die abgedunkelte Schicht 6 sind aus dem gleichen thermoplastischen Material, beispielsweise PVB, sodass sie nach der Lamination zur Verbundscheibe 100 miteinander zu der Zwischenschicht 10 verschmelzen. Die Zwischenschicht 10 hat beispielsweise eine Dicke von 0,76 mm.

Auf der innenraumseitigen Oberfläche IV der Innenscheibe 2 ist im Randbereich der Innenscheibe 2 rahmenförmig umlaufend ein opaker Schwarzdruck 13 aufgebracht. Der Schwarzdruck 13 verläuft entlang der umlaufenden Kante der Innenscheibe 2 und verhindert in dem Bereich, in dem er aufgebracht ist, die Durchsicht durch die Verbundscheibe 100. Der Schwarzdruck 13 weist beispielhaft nicht in allen Bereichen die gleiche Breite auf; es ist aber auch möglich, dass der Schwarzdruck 13 überall die gleiche Breite aufweist. Mit "Breite" ist im Sinne der Erfindung die Ausdehnung senkrecht zur Erstreckungsrichtung gemeint. Der Schwarzdruck 13 überlappt in Durchsicht durch die Verbundscheibe 100 mit einem umlaufenden Randbereich des Funktionselementes 4. Der überlappte umlaufende Randbereich des Funktionselementes 4 weist beispielsweise eine Breite von 2 cm auf. Die teilweise Überlappung des Funktionselementes 4 mit dem Schwarzdruck 13 hat den Zweck, den unästhetischen Rand des Funktionselementes für Insassen des Fahrzeugs zu verdecken. Es kann optional auch ein weiterer Schwarzdruck 13 in einem umlaufenden Randbereich auf der außenseitigen Oberfläche I oder der innenraumseitigen Oberfläche II der Außenscheibe 1 aufgebracht sein (hier nicht gezeigt).

Das Funktionselement 4 ist beispielsweise ein PDLC-Funktionselement, welches mit einem Leitungselement, beispielsweise einem Flachleiter, mit einer außerhalb der Verbundscheibe 100 befindlichen Steuereinheit verbunden ist (hier nicht gezeigt). Das Funktionselement 4 kann über eine angelegte Wechselspannung (Effektivwert der Wechselspannung), welche durch die Steuereinheit ausgegeben werden kann, seinen optischen Zustand wechseln. Das Funktionselement 4 kann beispielsweise mittels der angelegten Spannung zwischen zwei Zuständen, einem transluzenten Zustand (also ein Zustand mit hoher Lichtstreuung) und einem transparenten Zustand, schalten. Der transluzente Zustand wird vorzugsweise erzielt, wenn das Funktionselement 4 spannungsfrei ist, also keine elektrische Spannung angelegt wird. Der transparente Zustand wird vorzugsweise erzielt, wenn durch die Steuereinheit eine elektrische Spannung an das Funktionselement 4 angelegt wird. Es sind auch Zustände zwischen einer maximalen Transparenz des Funktionselementes 4 und der maximalen Transluzenz des Funktionselementes 4 möglich.

In einer Ausnehmung 9 der Innenscheibe 2 ist eine Lichtquelle 7 angeordnet. Die Ausnehmung 7 ist in einem Randbereich der Verbundscheibe 100 angeordnet und ist bei Draufsicht auf die innenraumseitige Oberfläche IV der Innenscheibe innerhalb des Bereiches auf dem der Schwarzdrucks 13 aufgebracht ist, angeordnet. Die Lichtquelle 7 ist beispielsweise eine LED- (light-emmiting-diode) Anordnung. Die Ausnehmung 9 der Innenscheibe 2 hat beispielsweise eine zylindrische Form und ist nur auf der innenraumseitigen Oberfläche IV der Innenscheibe 2 geöffnet. Die Öffnung der Ausnehmung 9 kann optional verdeckt sein (beispielsweise durch eine schwarz gefärbte und opake Folie). Bei der Aktivierung der Lichtquelle 7 wird über die Innenfläche der Ausnehmung 9 sichtbares Licht 3 in die Innenscheibe 2 eingekoppelt. Innerhalb der Innenscheibe 2 findet eine Totalreflexion des eingekoppelten Lichtes 3 statt. Die Lichtquelle 7 strahlt dabei das sichtbare Licht 3 in Richtung eines Auskopplungselementes 5, welches zentral auf innenraumseitigen Oberfläche IV der Innenscheibe 2 aufgebracht ist. Die Totalreflexion des sichtbaren Lichtes 3 in der Innenscheibe 2 findet statt, bis das sichtbare Licht 3 auf das Auskopplungselement 5 trifft. In diesem Fall wird das sichtbare Licht 3 an dieser Stelle aus der Innenscheibe 2 ausgekoppelt und nach außen, insbesondere in Richtung des Fahrzeuginnenraums, gestreut.

Durch das Auskopplungselement 5 lassen sich sichtbare Lichtmuster auf der Verbundscheibe 100 erzeugen. Das Auskopplungselement ist beispielsweise eine lichtdiffundierende Beschichtung, z.B. in Form einer im Siebdruckverfahren aufgebrachten und eingebrannten Paste, die auf die innenraumseitige Oberfläche IV der Innenscheibe 2 aufgebracht wurde. Das Auskopplungselement bildet beispielsweise den Schriftzug "Saint-Gobain" wie in Figur 1 angedeutet ist.

Das von der Lichtquelle 7 in die Innenscheibe 2 eingekoppelte Licht 3 transmittiert nicht zu 100 % unter Totalreflexion bis zum Auskopplungselement 5. Ein kleiner Anteil des sichtbaren Lichtes 3 koppelt bereits vor dem Auftreffen auf das Auskopplungselement 5 aus und trifft so zum Beispiel auf das Funktionselement 4. Das Auftreffen des sichtbaren Lichtes 3 auf das Funktionselement 4 führt zu einem milchigen Lichtschein auf der innenraumseitigen Oberfläche IV der Innenscheibe 2, welcher von Fahrzeuginnsassen im Fahrzeuginnenraum als unangenehm oder unästhetisch wahrgenommen werden kann. Dieser Lichtschein-Effekt nimmt mit dem Abstand zur Lichtquelle 7 ab und ist in Abhängigkeit vom optischen Zustand des Funktionselementes 4 unterschiedlich stark ausgeprägt. In einem transluzenten Zustand des Funktionselementes 4 ist der Lichtschein-Effekt stärker ausgeprägt als in einem transparenten Zustand. Er ist insbesondere in einem von Fahrzeuginnenraum sichtbaren Abschnitt Z des Funktionselementes 4 zu erkennen, welcher sich in räumlicher Nähe zur Lichtquelle 7 befindet. In der vorliegenden erfindungsgemäßen Ausführungsform aus Figur 1, Figur 1a und Figur 1b wird das Problem durch die Anordnung einer abgedunkelte Schicht 6 zwischen Funktionselement 4 und Innenscheibe 2 gelöst. Die abgedunkelte Schicht 6 ist beispielsweise schwarz getönt und weist einen Transmissionsgrad für sichtbares Licht von 40 % auf. Aufgrund der Tönung der abgedunkelten Schicht 6 und der verringerten Lichttransmission durch die abgedunkelte Schicht 6 wird ein großer Anteil des abgeleiteten sichtbaren Lichtes 3 von der abgedunkelten Schicht 6 absorbiert. Der Lichtscheineffekt im Abschnitt Z des Funktionselementes 4 kann dadurch stark reduziert oder sogar vollständig vermieden werden. Dies ist ein großer Vorteil der Erfindung und war für die Erfinder überraschend.

Die Figur 1b zeigt einen vergrößerten Ausschnitt eines Randbereiches Y der Verbundscheibe 100. Der vergrößerte Randbereich Y der Verbundscheibe ist in Figur 1a angedeutet.

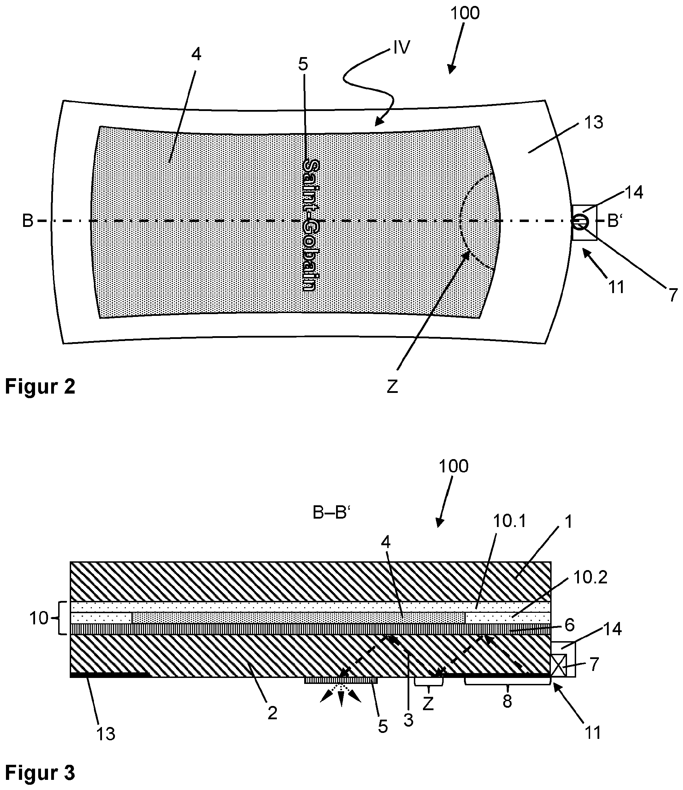

Die in den Figuren 2 bis 6 gezeigten Variante entsprechen im Wesentlichen der Variante aus der Figur 1, Figur 1a und Figur 1b, sodass hier nur auf die Unterschiede eingegangen wird und ansonsten auf die Beschreibung zu Figur 1, Figur 1a und Figur 1b verwiesen wird.

Die Figur 2 zeigt eine Draufsicht auf die Verbundscheibe 100, wobei die Lichtquelle 7 nicht in einer Ausnehmung 9, sondern mittels eines Gehäuses 14 an einer Seitenkante 11 der Verbundscheibe 100 angeordnet ist. Die Figuren 3 bis 6 zeigen verschiedene Ausführungsformen der Erfindung in der Querschnittansicht. Die Querschnittansichten der Figuren 3 bis 6 entsprechen der Schnittlinie B-B' der Verbundscheibe 100, wie in Figur 2 angedeutet ist. Das bedeutet, die verschiedenen Ausführungsformen der Figuren 3 bis 6 sind in Draufsicht auf die Verbundscheibe 100 (schematisch) optisch gleich ausgebildet.

Im Unterschied zu Figur 1, Figur 1a und Figur 1b weist die Verbundscheibe 100 aus Figur 3 keine Ausnehmung 9 der Innenscheibe 2 auf und die Lichtquelle 7 ist über ein Gehäuse 14 an einer Seitenkante 11 der Innenscheibe 2 angebracht. Die Lichtquelle 7 koppelt das von ihr abgestrahlte sichtbare Licht 3 also über eine seitliche Kante der Innenscheibe 2 in die Innenscheibe 2 ein.

Im Unterschied zu Figur 1, Figur 1a und Figur 1b weist die Verbundscheibe 100 aus Figur 4 keine Ausnehmung 9 der Innenscheibe 2 auf und die Lichtquelle 7 ist über ein Gehäuse 14 an einer Seitenkante 11 der Innenscheibe 2 angebracht. Die Lichtquelle 7 koppelt das von ihr abgestrahlte sichtbare Licht 3 also über eine seitliche Kante der Innenscheibe 2 in die Innenscheibe 2 ein. Die abgedunkelte Schicht 6 erstreckt sich zudem nur bereichsweise, beispielsweise zu 20 %, über die Fläche Verbundscheibe 100. Neben der abgedunkelten Schicht 6 ist eine dritte transparente thermoplastische Folie 10.3 angeordnet, welche sich in der gleichen Ebene wie die abgedunkelte Schicht 6 befindet, also in Durchsicht durch die Verbundscheibe 100 nicht mit dieser überlappt. Die abgedunkelte Schicht 6 und die transparente dritte thermoplastische Folie 10.3 erstrecken sich gemeinsam betrachtet über die gesamte Fläche der Verbundscheibe 100. Die thermoplastische Zwischenschicht 10 setzt sich somit aus der ersten, der zweiten, der dritten thermoplastischen Folie und der abgedunkelten Schicht 6 zusammen.

Das Auskopplungselement 5 ist anders als in Figur 1 und 1a nicht auf der innenraumseitigen Oberfläche IV der Innenscheibe 2 aufgebracht, sondern auf der der Innenscheibe 2 zugewandten Fläche der dritten thermoplastischen Folie 10.3.

Die abgedunkelte Schicht 6 erstreckt sich über den gesamten zwischen der Lichtquelle 7 und dem Funktionselement 4 befindlichen Bereich 8 der Verbundscheibe 100 und über einen zu der Lichtquelle 7 nächstliegenden Randbereich 12 des Funktionselementes 4. Die abgedunkelte Schicht 6 ist bei Draufsicht auf die innenraumseitige Oberfläche IV der Innenscheibe 2 vollständig durch den Schwarzdruck verdeckt. Die abgedunkelte Schicht 6 weist einen Lichttransmissionsgrad für sichtbares Licht von kleiner 1 % auf und ist schwarz gefärbt. Durch den niedrigen Transmissionsgrad der abgedunkelten Schicht wird ein Großteil des eingekoppelten Lichtes 3, welches nicht unter Totalreflexion in der Innenscheibe 2 zum Auskopplungselement 5 transmittiert von der abgedunkelten Schicht 6 absorbiert, sodass der Lichtscheineffekt im vom Fahrzeuginnenraum Abschnitt Z des Funktionselementes 4 reduziert oder vermieden werden kann.

Das Auskopplungselement 5 ist in Figur 5 anders als in Figur 1 und 1a nicht auf der innenraumseitigen Oberfläche IV der Innenscheibe 2 aufgebracht, sondern auf der außenseitigen Oberfläche III der Innenscheibe 2. Die Lichtquelle 7 ist identisch zu Figur 3 mittels eines Gehäuses 14 an einer Seitenkante 11 der Innenscheibe 2 angebracht. Die abgedunkelte Schicht 6 ist in Form eines opaken Schwarzdrucks auf der außenseitigen Oberfläche III der Innenscheibe 2 aufgebracht und erstreckt sich über den gesamten zwischen der Lichtquelle 7 und dem Funktionselement 4 befindlichen Bereich 8 der Verbundscheibe 100 und über den zu der Lichtquelle 7 nächstliegenden Randbereich 12 des Funktionselementes 4. Die Zwischenschicht 10 umfasst neben der ersten und der zweiten thermoplastischen Folie 10.1, 10.2 auch eine dritte transparente thermoplastische Folie 10.3, welche zwischen dem Funktionselement 4 und der Innenscheibe 2 angeordnet ist und sich über die gesamte Fläche der Verbundscheibe 100 erstreckt.

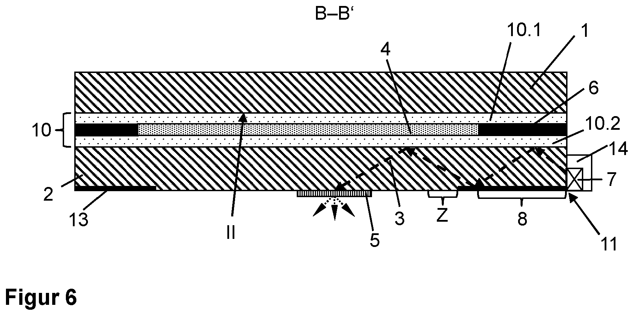

In Figur 6 ist die abgedunkelte Schicht 6 rahmenförmig um das Funktionselement 4 angeordnet und weist einen Lichttransmissionsgrad von kleiner 1 % auf. Die Zwischenschicht 10 umfasst die erste thermoplastische Folie 10.1, die abgedunkelte Schicht 6 und eine dritte thermoplastische Folie 10.3, wobei die dritte thermoplastische Folie zwischen dem Funktionselement 4 und der Innenscheibe 2 angeordnet ist. Die Lichtquelle 7 ist identisch zu Figur 3 mittels eines Gehäuses 14 an einer Seitenkante 11 der Innenscheibe 2 angebracht.

Die rahmenförmig ausgebildete abgedunkelte Schicht 6 verringert das Auftreffen von sichtbaren Licht 3 auf die innenraumseitige Oberfläche II der Außenscheibe 1. Bei gattungsgemäßen Verbundscheibe 100 wird ein Teil des sichtbaren Lichtes 3 von der innenraumseitigen Oberfläche II der Außenscheibe 1 reflektiert. Dieses reflektierte Licht 3 trifft auf das Funktionselement 4, was wiederum bereits beschriebenen Lichtscheineffekt im Abschnitt Z des Funktionselementes 4 führen kann. Durch die rahmenförmig ausgebildete Schicht 6 kann diese Reflexion an der innenraumseitigen Oberfläche II der Außenscheibe 1 reduziert werden.

### Bezugszeichenliste

- 1: Außenscheibe
- 2: Innenscheibe
- 3: Licht
- 4: Funktionselement
- 5: Auskopplungselement
- 6: abtgedunkelte Schicht
- 7: Lichtquelle
- 8: Bereich zwischen der Lichtquelle 7 und dem Funktionselement 4
- 9: Ausnehmung der Innenscheibe 2
- 10: Zwischenschicht
- 10.1: erste thermoplastische Folie
- 10.2: zweite thermoplastische Folie
- 10.3: dritte thermoplastische Folie
- 11: Seitenkante der Innenscheibe 2
- 12: zur Lichtquelle 7 nächstliegender Randbereich des Funktionselementes 4
- 13: Schwarzdruck
- 14: Gehäuse der Lichtquelle 7

- 100: Verbundscheibe

- I: außenseitige Oberfläche der Außenscheibe 1
- II: innenraumseitige Oberfläche der Außenscheibe 1
- III: außenseitige Oberfläche der Innenscheibe 2
- IV: innenraumseitige Oberfläche der Innenscheibe 2

- Z: Abschnitt des Lichtscheineffektes
- Y: Vergrößerter Ausschnitt eines Randbereiches der Verbundscheibe 100
- A-A': Querschnitt durch die Verbundscheibe 100 aus Figur 1
- B-B': Querschnitt durch die Verbundscheibe 100 aus Figur 2

## Patentansprüche

1. Verbundscheibe (100) mit Lichtquelle, umfassend:
- eine Außenscheibe (1) und eine Innenscheibe (2),
- eine erste zwischen der Außenscheibe (1) und der Innenscheibe (2) angeordnete thermoplastische Folie (10.1),
- ein Funktionselement (4) mit elektrisch steuerbaren optischen Eigenschaften,
- eine abgedunkelte Schicht (6),
- ein Auskopplungselement (5) zum Auskoppeln von Licht (3) aus der Innenscheibe (2) und
- eine Lichtquelle (7) zum Einkoppeln von Licht (3) in die Innenscheibe (2),
wobei die abgedunkelte Schicht (6) zumindest einen opaken Bereich mit einem Lichttransmissionsgrad von kleiner oder gleich 50 % aufweist und der opake Bereich zumindest im Bereich (8) zwischen der Lichtquelle (7) und dem Funktionselement (4) vorliegt
**dadurch gekennzeichnet, dass**
die Lichtquelle an einer Seitenkante der Innenscheibe oder in einer Ausnehmung der Innenscheibe angeordnet ist.

2. Verbundscheibe (100) nach Anspruch 1, wobei sich zumindest ein zur Lichtquelle (7) nächstliegender Randbereich (12) des Funktionselementes (4) mit dem opaken Bereich der abgedunkelten Schicht (6) deckt.

3. Verbundscheibe (100) nach Anspruch 2, wobei eine zweite thermoplastische Folie (10.2) das Funktionselement (4) teilweise oder vollständig umrandet.

4. Verbundscheibe (100) nach einem der Ansprüche 1 bis 3, wobei zumindest der opake Bereich der abgedunkelten Schicht (6) einen Lichttransmissionsgrad von <10 %, bevorzugt von <1 % aufweist.

5. Verbundscheibe (100) nach einem der Ansprüche 1 bis 4, wobei die abgedunkelte Schicht (6) als eine thermoplastische Folie mit dem opaken Bereich und einem transparenten Bereich ausgebildet ist, wobei der transparente Bereich der abgedunkelten Schicht einen Lichttransmissionsgrad von ≥50 % aufweist.

6. Verbundscheibe (100) nach einem der Ansprüche 1 bis 4, wobei die gesamte abgedunkelte Schicht (6) einen Lichttransmissionsgrad von <10 %, bevorzugt von <1 % aufweist.

7. Verbundscheibe (100) nach Anspruch 6, wobei die abgedunkelte Schicht (6) sich über weniger als 40 %, bevorzugt über weniger als 30 %, besonders bevorzugt über weniger als 20 % der Fläche der Verbundscheibe (100) erstreckt.

8. Verbundscheibe (100) nach Anspruch 6, wobei die abgedunkelte Schicht (6) auf einer der Außenscheibe (1) zugewandten, außenseitigen Oberfläche (III) der Innenscheibe (2) aufgebracht ist.

9. Verbundscheibe (100) nach Anspruch 8, wobei die abgedunkelte Schicht (6) als ein, bevorzugt schwarzer, Siebdruck ausgebildet ist.

10. Verbundscheibe (100) nach Anspruch 2 oder 3 wobei die abgedunkelte Schicht (6) eine getönte oder gefärbte thermoplastische Folie ist und einen Lichttransmissionsgrad von mindestens 15 % und höchstens 50 % aufweist.

11. Verbundscheibe (100) nach Anspruch 10, wobei die abgedunkelte Schicht (6) sich über die gesamte Fläche der Verbundscheibe (100) erstreckt.

12. Verbundscheibe (100) nach einem der Ansprüche 1 bis 11, wobei das Funktionselement (4) ein PDLC-Funktionselement ist.

13. Verbundscheibe (100) nach einem der Ansprüche 1 bis 12, wobei eine Emissivitäts-mindernde Beschichtung auf einer von der Außenscheibe (1) abgewandten, innenraumseitigen Oberfläche (IV) der Innenscheibe (2) aufgebracht ist.

14. Verfahren zur Herstellung einer Verbundscheibe (100) mit Lichtquelle nach einem der Ansprüche 1 bis 13, wobei
(a) ein Schichtstapel aus der Außenscheibe (1), der ersten thermoplastischen Folie (10.1), dem Funktionselement (4), der abgedunkelten Schicht (6), dem Auskopplungselement (5) und der Innenscheibe (2) bereitgestellt wird,
(b) der Schichtstapel zu der Verbundscheibe (100) laminiert wird und
(c) die Lichtquelle (7) an einer Seitenkante (11) der Innenscheibe (2) oder in einer Ausnehmung (9) der Innenscheibe (2) angeordnet wird.

15. Verwendung einer Verbundscheibe (100) nach einem der Ansprüche 1 bis 13 in Fortbewegungsmitteln für den Verkehr auf dem Lande, in der Luft oder zu Wasser, bevorzugt in Kraftfahrzeugen beispielsweise als Windschutzscheibe, Heckscheibe, Seitenscheiben und/oder Glasdach, besonders bevorzugt als Dachscheibe oder als funktionales und/oder dekoratives Einzelstück und als Einbauteil in Möbeln, Geräten und Gebäuden.

## Claims

1. A laminated pane (100) with light source, comprising:
- an outer pane (1) and an inner pane (2),
- a first thermoplastic film (10.1) arranged between the outer pane (1) and the inner pane (2),
- a functional element (4) with electrically controllable optical properties,
- a darkened layer (6),
- a decoupling element (5) for decoupling light (3) from the inner pane (2), and
- a light source (7) for coupling light (3) into the inner pane (2),
wherein the darkened layer (6) has at least one opaque region having a light transmittance of less than or equal to 50% and the opaque region is present at least within the region (8) between the light source (7) and the functional element (4),
**characterised in that** the light source (7) is arranged on a side edge (11) of the inner pane (2) or in a recess (9) of the inner pane (2).

2. The laminated pane (100) according to claim 1, wherein at least one edge region (12) of the functional element (4), which is closest to the light source (7), coincides with the opaque region of the darkened layer (6).

3. The laminated pane (100) according to claim 2, wherein a second thermoplastic film (10.2) partially or completely surrounds the functional element (4).

4. The laminated pane (100) according to any of claims 1 to 3, wherein at least the opaque region of the darkened layer (6) has a light transmittance of <10%, preferably of <1%.

5. The laminated pane (100) according to any of claims 1 to 4, wherein the darkened layer (6) is designed as a thermoplastic film having the opaque region and a transparent region, wherein the transparent region of the darkened layer has a light transmittance of ≥50%.

6. The laminated pane (100) according to any of claims 1 to 4, wherein the entire darkened layer (6) has a light transmittance of <10%, preferably of < 1 %.

7. The laminated pane (100) according to claim 6, wherein the darkened layer (6) extends over less than 40%, preferably over less than 30%, particularly preferably over less than 20%, of the area of the laminated pane (100).

8. The laminated pane (100) according to claim 6, wherein the darkened layer (6) is applied to an outer-side surface (III) of the inner pane (2) facing the outer pane (1).

9. The laminated pane (100) according to claim 8, wherein the darkened layer (6) is formed as a, preferably black, screen printing.

10. The laminated pane (100) according to either claim 2 or claim 3, wherein the darkened layer (6) is a tinted or coloured thermoplastic film and has a light transmittance of at least 15% and at most 50%.

11. The laminated pane (100) according to claim 10, wherein the darkened layer (6) extends over the entire surface of the laminated pane (100).

12. The laminated pane (100) according to any of claims 1 to 11, wherein the functional element (4) is a PDLC functional element.

13. The laminated pane (100) according to any of claims 1 to 12, wherein an emissivity-reducing coating is applied to an interior-side surface (IV) of the inner pane (2) facing away from the outer pane (1).

14. A method for producing a laminated pane (100) with light source according to any of claims 1 to 13, wherein
(a) a layer stack consisting of the outer pane (1), the first thermoplastic film (10.1), the functional element (4), the darkened layer (6), the decoupling element (5) and the inner pane (2) is provided,
(b) the layer stack is laminated to form the laminated pane (100), and
(c) the light source (7) is arranged on a side edge (11) of the inner pane (2) or in a recess (9) of the inner pane (2).

15. A use of a laminated pane (100) according to any of claims 1 to 13 in means of transportation for traffic on land, in the air, or in water, preferably in motor vehicles, for example as a windscreen, rear window, side windows, and/or glass roof, particularly preferably as a roof pane or as a functional and/or decorative individual piece and as a built-in part in furniture, devices, and buildings.

## Revendications

1. Vitrage feuilleté (100) comportant une source de lumière, comprenant :
- une vitre externe (1) et une vitre interne (2),
- une première feuille thermoplastique (10.1) disposée entre la vitre externe (1) et la vitre interne (2),
- un élément fonctionnel (4) comportant des propriétés optiques pouvant être commandées électriquement,
- une couche assombrie (6),
- un élément de découplage (5) pour le découplage de lumière (3) hors de la vitre interne (2) et
- une source de lumière (7) pour le couplage de lumière (3) dans la vitre interne (2),
dans lequel la couche assombrie (6) présente au moins une zone opaque comportant un degré de transmission de lumière inférieur ou égal à 50 % et la zone opaque est présente au moins dans la zone (8) entre la source de lumière (7) et l'élément fonctionnel (4)
**caractérisé en ce que**
la source de lumière est disposée sur un bord latéral de la vitre interne ou dans un évidement de la vitre interne.

2. Vitrage feuilleté (100) selon la revendication 1, dans lequel au moins une zone marginale (12) de l'élément fonctionnel (4), la plus proche de la source de lumière (7), recouvre la zone opaque de la couche assombrie (6).

3. Vitrage feuilleté (100) selon la revendication 2, dans lequel une seconde feuille thermoplastique (10.2) entoure partiellement ou totalement l'élément fonctionnel (4).

4. Vitrage feuilleté (100) selon l'une des revendications 1 à 3, dans lequel au moins la zone opaque de la couche assombrie (6) présente un degré de transmission de lumière < 10 %, de préférence < 1 %.

5. Vitrage feuilleté (100) selon l'une des revendications 1 à 4, dans lequel la couche assombrie (6) est réalisée sous forme de feuille thermoplastique comportant la zone opaque et une zone transparente, dans lequel la zone transparente de la couche assombrie présente un degré de transmission de lumière ≥ 50 %.

6. Vitrage feuilleté (100) selon l'une des revendications 1 à 4, dans lequel l'ensemble de la couche assombrie (6) présente un degré de transmission de lumière < 10 %, de préférence < 1 %.

7. Vitrage feuilleté (100) selon la revendication 6, dans lequel la couche assombrie (6) s'étend sur moins de 40 %, de préférence sur moins de 30 %, de manière particulièrement préférée sur moins de 20 % de la surface du vitrage feuilleté (100).

8. Vitrage feuilleté (100) selon la revendication 6, dans lequel la couche assombrie (6) est appliquée sur une surface côté extérieur (III) de la vitre interne (2), tournée vers la vitre externe (1).

9. Vitrage feuilleté (100) selon la revendication 8, dans lequel la couche assombrie (6) est réalisée sous forme de sérigraphie, de préférence noire.

10. Vitrage feuilleté (100) selon la revendication 2 ou 3, dans lequel la couche assombrie (6) est une feuille thermoplastique teintée ou colorée et présente un degré de transmission de lumière d'au moins 15 % et d'au plus 50 %.

11. Vitrage feuilleté (100) selon la revendication 10, dans lequel la couche assombrie (6) s'étend sur l'ensemble de la surface du vitrage feuilleté (100).

12. Vitrage feuilleté (100) selon l'une des revendications 1 à 11, dans lequel l'élément fonctionnel (4) est un élément fonctionnel PDLC.

13. Vitrage feuilleté (100) selon l'une des revendications 1 à 12, dans lequel un revêtement réduisant l'émissivité est appliqué sur une surface côté espace intérieur (IV) de la vitre interne (2), opposée à la vitre externe (1).

14. Procédé de fabrication d'un vitrage feuilleté (100) comportant une source de lumière selon l'une des revendications 1 à 13, dans lequel
(a) un empilement de couches, constitué de la vitre externe (1), de la première feuille thermoplastique (10.1), de l'élément fonctionnel (4), de la couche assombrie (6), de l'élément de découplage (5) et de la vitre interne (2), est fourni,
(b) l'empilement de couches est stratifié pour former le vitrage feuilleté (100), et
(c) la source de lumière (7) est disposée sur un bord latéral (11) de la vitre interne (2) ou dans un évidement (9) de la vitre interne (2).

15. Utilisation d'un vitrage feuilleté (100) selon l'une des revendications 1 à 13 dans des moyens de locomotion pour la circulation terrestre, aérienne ou maritime, de préférence dans des véhicules automobiles, par exemple en tant que pare-brise, lunette arrière, vitre latérale et/ou toit en verre, de manière particulièrement préférée en tant que vitre de toit ou en tant que pièce unique fonctionnelle et/ou décorative et en tant que pièce à insérer dans des meubles, appareils et bâtiments.
